# EUROPEAN PATENT SPECIFICATION

(11) **EP 4 174 801 B1**
(45) Date of publication and mention of the grant of the patent: **13.03.2024**
(21) Application number: 21205976.0
(22) Date of filing: 02.11.2021
(51) Int. Cl.: G06V 20/62

(54) **IMAGE CAPTURING METHOD**
BILDERFASSUNGSVERFAHREN
PROCÉDÉ DE CAPTURE D'IMAGE

(43) Date of publication of application: 03.05.2023
(73) Proprietor: Gogoro Inc., Wanchai, Hong Kong (CN)
(72) Inventor: LIN, Yi-Chia, 333 Taoyuan City (TW); FU, Chih-Min, 333 Taoyuan City (TW); SHIH, I-Fen, 333 Taoyuan City (TW)
(74) Representative: Viering, Jentschura & Partner mbB Patent- und Rechtsanwälte

(56) References cited:
- JP-A- 2007 086 858
- US-A1- 2018 300 578
- US-A1- 2020 382 705

## Description

### BACKGROUND

### Technical Field

The present disclosure relates to an image capturing method.

### Description of Related Art

Shared motor vehicles provide a lot of convenience for the people. The rent-and-return feature combined with electric motor vehicles allows users to move more maneuverable and have a longer travel distance than shared bicycles, while also taking into account the environmental protection effect.

However, the shared motor vehicles are also often disputed because of the rental and return feature. For example, after returning a motor vehicle, the user will receive a ticket due to the movement of the motor vehicle by others. The user will have a poor user experience due to the failure to provide proof of returning the motor vehicle.

Accordingly, how to provide an image capturing method to solve the aforementioned problems becomes an important issue to be solved by those in the industry. JP 2007 086 858 A discloses an image capturing method, comprising: providing an image capturing area on a display screen of a user device; providing an indication area in the image capturing area; marking a license plate after identifying the license plate based on at least one feature in the image capturing area. Another method is disclosed by US 2018 / 300 578 A1.

### SUMMARY

An aspect of the disclosure is to provide an image capturing method that can efficiently solve the aforementioned problems.

According to the present invention, an image capturing method according to claim 1 is provided. The dependent claims show some examples thereof

Accordingly, in the image capturing method of the present disclosure, the indication area provided in the image capturing area can guide the user to obtain an image with a specific composition to ensure that the image is saved with specific information. By guiding the user to display the license plate in the indication area in a predetermined ratio, the safety of the user in the process of capturing images can be improved. By marking the license plate, the user's recognition of the license plate can be improved, thereby reducing the time for the user to capture images. By limiting that the image is captured only when the marked license plate is present in the indication area in the predetermined ratio for a predetermined period of time, the stability of capturing the image can be increased to make the obtained image clearer. By combining the image capturing method with a vehicle return system, the user can be assisted to save the return record by capturing images, so as to reduce return disputes.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a flow chart of an image capturing method according to an embodiment of the present disclosure;
Fig. 2 is a schematic diagram showing one of steps of the image capturing method according to an embodiment of the present disclosure;
Fig. 3 is a schematic diagram showing one of steps of the image capturing method according to an embodiment of the present disclosure;
Fig. 4 is a schematic diagram showing one of steps of the image capturing method according to an embodiment of the present disclosure; and
Fig. 5 is a schematic diagram showing one of steps of the image capturing method according to an embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

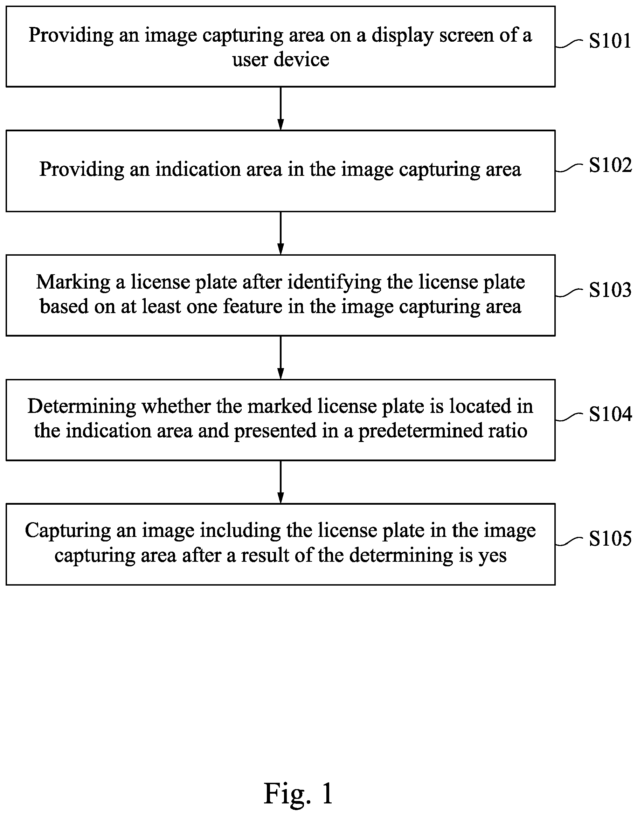

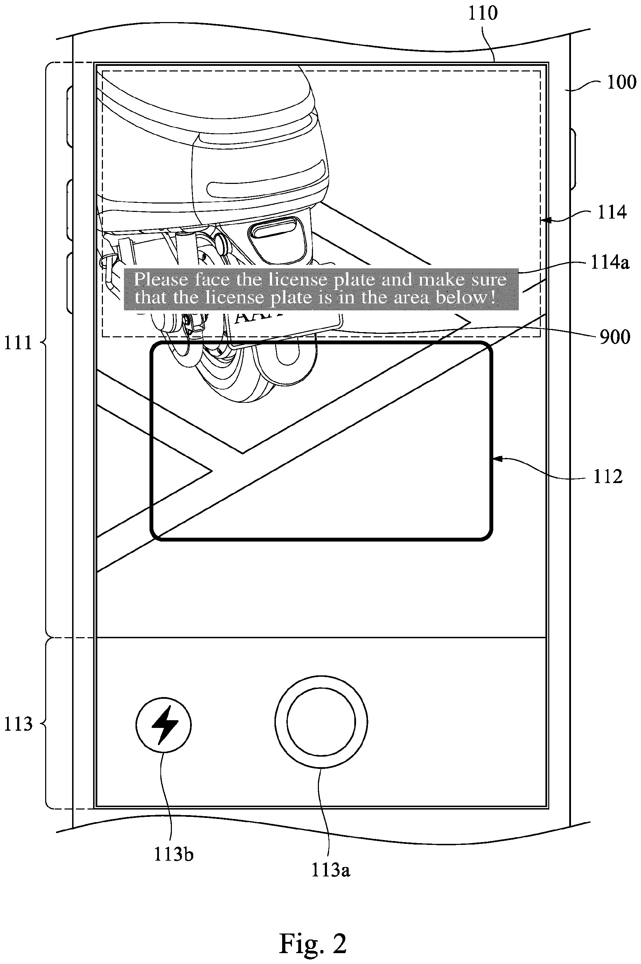

Reference is made to Fig. 1 with reference to Figs. 2 to 5 together. Fig. 1 is a flow chart of an image capturing method according to an embodiment of the present disclosure. Figs. 2 to 5 are schematic diagrams respectively showing different steps of the image capturing method according to an embodiment of the present disclosure. As shown in Fig. 1, in the present disclosure, the image capturing method mainly includes step S101 to step S105.

Step S101: providing an image capturing area 111 on a display screen 110 of a user device 100.

Step S102: providing an indication area 112 in the image capturing area 111.

Step S103: marking a license plate 900 after identifying the license plate 900 based on at least one feature in the image capturing area 111.

Step S104: determining whether the marked license plate 900 is located in the indication area 112 and presented in a predetermined ratio.

Step S105: capturing an image including the license plate 900 in the image capturing area 111 after a result of the determining is yes.

In some embodiments, the user device 100 is, for example, a smart phone, but the disclosure is not limited in this regard. In some embodiments, the user device 100 further includes a camera module (not shown). The camera module is configured to take pictures of the surroundings of the user device 100. The display screen 110 is configured to display the scene shot by the camera module in the image capturing area 111.

As shown in Figs. 2 to 5, in the present embodiment, in the image capturing area 111, a scene of a vehicle with a license plate 900 is taken as an example.

In some embodiments, the at least one feature includes English letters and numbers with a predetermined format/number of characters and a predetermined aspect ratio of license plate, but the disclosure is not limited in this regard. For example, the predetermined format may include a font format and/or an arrangement order format of the English letters and numbers of license plates of various types of traffic vehicles that comply with local regulations, but the disclosure is not limited in this regard. For example, the predetermined aspect ratio of license plate may be a specific range of aspect ratios of the license plates of the various traffic vehicles that comply with local regulations.

As shown in Fig. 2, in the present embodiment, since the camera module does not shot directly behind the vehicle, the aspect ratio of the license plate 900 displayed in the image capturing area 111 does not meet the predetermined aspect ratio of license plate, and the license plate 900 is not recognized or marked because it does not have the aforementioned at least one feature.

In some embodiments, the image capturing method further includes step S 106a.

Step S106a: further providing a guidance information display area 114 in the image capturing area 111.

As shown in Fig. 2, in the present embodiment, the guidance information display area 114 is indicated by a dotted line. The guidance information display area 114 provides a dialog box. When step S103 is performed according to the image capturing method of the present disclosure but the license plate 900 is not recognized in the image capturing area 111, the guidance information display area 114 may provide the dialog box 114a and display a guide description in the dialog box 114a. For example, the dialog box 114a may display the guide description "Please face the license plate and make sure that the license plate is in the area below!", but the disclosure is not limited in this regard. The foregoing guide description may indicate the user to move the user device 100 so that the camera module can shoot from the rear of the vehicle, so that the license plate 900 can be recognized in the image capturing area 111.

In some embodiments, the image capturing method further includes step S106b.

Step S106b: when the marked license plate 900 is not located in the indication area 112 and/or is not presented in the predetermined ratio, providing a guide description in the guidance information display area 114.

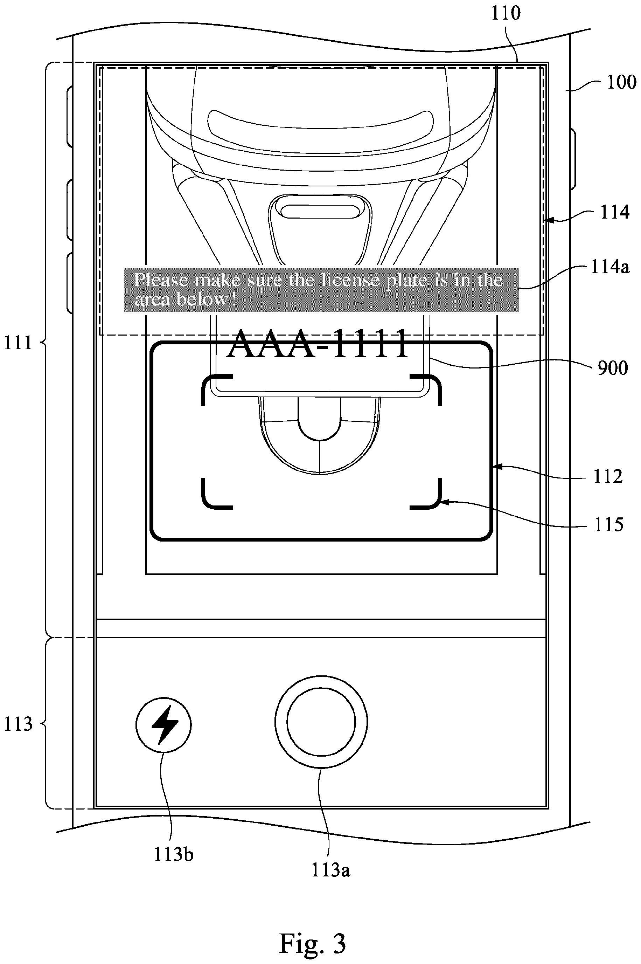

As shown in Fig. 3, in the present embodiment, when step S104 is performed according to the image capturing method of the present disclosure but it is found that the marked license plate 900 is not located in the indication area 112, the guidance information display area 114 may provide the dialog box 114a and display a guide description in the dialog box 114a. For example, the dialog box 114a may display the guide description "Please make sure the license plate is in the area below!", but the disclosure is not limited in this regard. The aforementioned guide description may indicate the user to move the user device 100 to adjust the viewing angle of the camera module, so that the marked license plate 900 can be located in the indication area 112.

In some embodiments, when step S104 is performed according to the image capturing method of the present disclosure but it is found that the marked license plate 900 is not presented in the predetermined ratio, the guidance information display area 114 may provide the dialog box 114a and display a guide description in the dialog box 114a. For example, the dialog box 114a may display the guide description "Please come closer!", but the disclosure is not limited in this regard. The aforementioned guide description may indicate the user to move the user device 100 to adjust the distance between the camera module and the license plate 900, so that the marked license plate 900 is displayed in the indication area 112 in the predetermined ratio. In this way, the personal safety problem caused by the user being too close to the lane can be avoided.

In some embodiments, the predetermined ratio is a ratio of the license plate 900 located in the indication area 112 to the image capturing area 111 (for example, a width ratio or an area ratio), but the disclosure is not limited in this regard. For example, the width ratio of the license plate 900 to the image capturing area 111 is between 1/4 and 3/4, but the disclosure is not limited in this regard.

In some embodiments, the image capturing method further includes step S103a.

Step S103a: providing a marking area 115 in the image capturing area 111 111 to mark the license plate 900.

As shown in Figs. 2 to 4, in the present embodiment, the indication area 112 may be marked by a frame formed by a solid line, and the marking area 115 may be marked by a frame formed by a dotted line, so as to improve the clarity of identification when the user operates the user device 100, but the disclosure is not limited in this regard. In practical applications, the indication area 112 and the marking area 115 may also be marked with different types or colors of frame or color blocks.

In some embodiments, the image capturing method further includes step S106c.

Step S106c: when the marked license plate 900 is located in the indication area 112 and presented in the predetermined ratio, providing a timing indicator 114b in the guidance information display area 114.

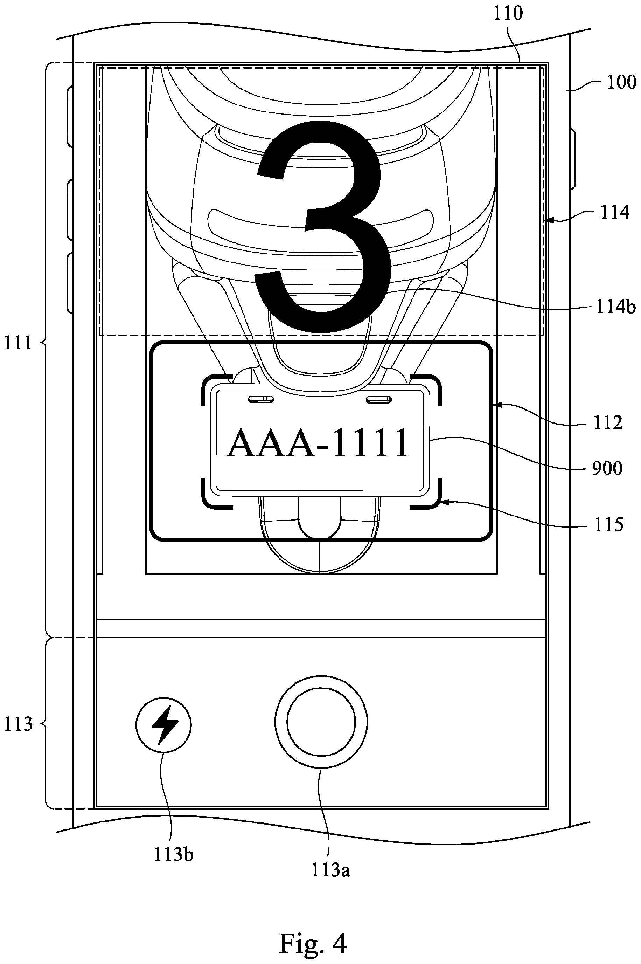

As shown in Fig. 4, in the present embodiment, when step S104 is performed according to the image capturing method of the present disclosure and it is found that the marked license plate 900 is presented in the predetermined ratio, the guidance information display area 114 may provide the timing indicator 114b. For example, the timing indicator 114b may be presented in the form of numbers, but the disclosure is not limited in this regard. For example, the timing indicator 114b may count down from 3, but the disclosure is not limited in this regard.

In some embodiments, step S105 further includes step S105a.

Step S105a: capturing the image at an end of countdown of the timing indicator 114b if the result of the determining is yes.

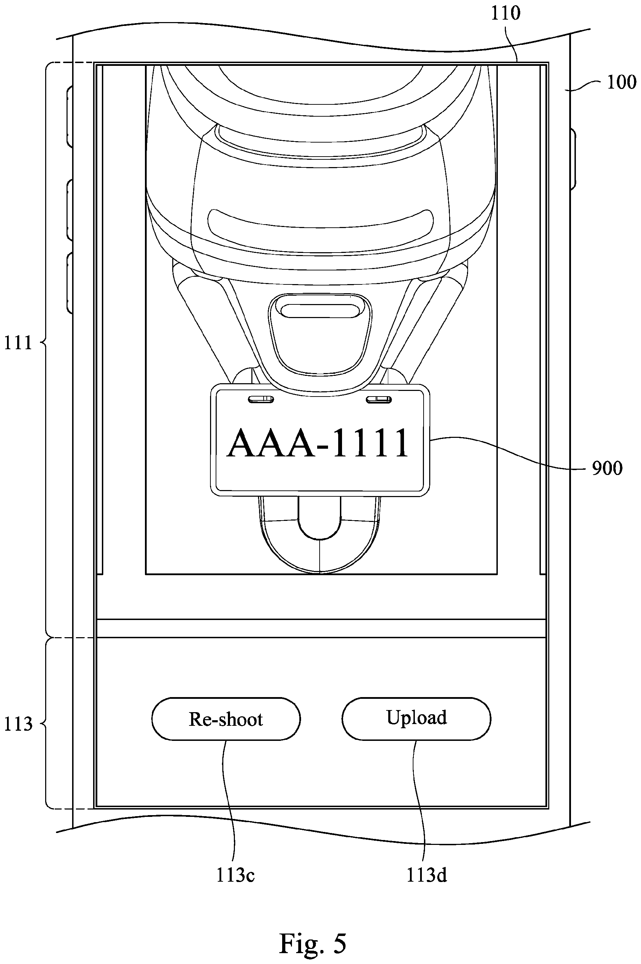

As shown in Fig. 5, the image presented in the image capturing area 111 is the image captured when the countdown of the timing indicator 114b ends.

In some embodiments, the image capturing method further includes step S107.

Step S107: further providing an operation area 113 on the display screen 110, in which the operation area 113 and the image capturing area 111 are side by side.

As shown in Figs. 2 to 5, the image capturing area 111 and the operation area 113 are arranged side by side on the display screen 110 up and down, but the disclosure is not limited in this regard.

As shown in Figs. 2 to 4, in the present embodiment, the operation area 113 may provide a shooting virtual button 113a and a flash virtual button 113b, but the disclosure is not limited in this regard. The shooting virtual button 113a may provide a function of manually capturing an image for a user who does not need to automatically capture the image based on the image capturing method of the present disclosure. The flash virtual button 113b may provide a function for the user to select whether to enable the camera module to turn on the flash when capturing the image.

As shown in Fig. 5, in the present embodiment, after the image is captured based on the image capturing method of the present disclosure, the operation area 113 may provide a re-shooting virtual button 113c and an upload virtual button 113d, but the disclosure is not limited in this regard. The re-shooting virtual button 113c may provide the user with a function of re-shooting an image. The upload virtual button 113d may provide the user with a function of uploading the captured image to a cloud storage device.

In some embodiments, when uploading the captured image, the satellite positioning information of the location of the captured image can be sent at the same time to more clearly record the parking position of the vehicle. The clear location of the vehicle can help the user find the vehicle more quickly the next time it is used, thereby saving the user the time to find the vehicle.

In some embodiments, the image capturing method of the present disclosure can be combined with a vehicle return system, so as to assist the user to save the return record by capturing images and thus reduce return disputes. For example, the image capturing method disclosed in the present disclosure can prevent the user from paying additional rental fees or paying a ticket because the vehicle is moved by others after returning the vehicle.

According to the foregoing recitations of the embodiments of the disclosure, it can be seen that in the image capturing method of the present disclosure, the indication area provided in the image capturing area can guide the user to obtain an image with a specific composition to ensure that the image is saved with specific information. By guiding the user to display the license plate in the indication area in a predetermined ratio, the safety of the user in the process of capturing images can be improved. By marking the license plate, the user's recognition of the license plate can be improved, thereby reducing the time for the user to capture images. By limiting that the image is captured only when the marked license plate is present in the indication area in the predetermined ratio for a predetermined period of time, the stability of capturing the image can be increased to make the obtained image clearer. By combining the image capturing method with a vehicle return system, the user can be assisted to save the return record by capturing images, so as to reduce return disputes.

## Claims

1. An image capturing method for assisting a user to save the return record of a vehicle, the method comprising:
providing an image capturing area (111) on a display screen (110) of the user's device (100);
providing an indication area in the image capturing area (111);
marking a license plate of a rental vehicle after identifying the license plate based on at least one feature in the image capturing area (111), wherein the at least one feature comprises English letters and numbers with a predetermined format/number of characters and a predetermined aspect ratio of license plate;
determining whether the marked license plate is located in the indication area and presented in a predetermined ratio; and
capturing an image including the license plate in the image capturing area (111) as a proof of returning the rental vehicle after a result of the determining is yes, and uploading the proof of returning the rental vehicle to a cloud storage device.

2. The image capturing method of claim 1, wherein the predetermined ratio is a ratio of the license plate located in the indication area to the image capturing area (111).

3. The image capturing method of any of the preceding claims, further comprising:
further providing an operation area (113) on the display screen (110), wherein the operation area (113) and the image capturing area (111) are side by side.

4. The image capturing method of claim 3, wherein the operation area (113) provides at least one of a shooting virtual button (113a), a flash virtual button (113b), a re-shooting virtual button (113c), and an upload virtual button (113d).

5. The image capturing method of any of the preceding claims, further comprising:
further providing a guidance information display area (114) in the image capturing area (111).

6. The image capturing method of claim 5, wherein the guidance information display area (114) provides a dialog box (114a) or a timing indicator.

7. The image capturing method of any of the preceding claims, further comprising:
when the marked license plate is not located in the indication area and/or is not presented in the predetermined ratio, providing a guide description in a guidance information display area (114).

8. The image capturing method of any of the preceding claims, further comprising:
when the marked license plate is located in the indication area and presented in the predetermined ratio, providing a timing indicator in a guidance information display area (114).

9. The image capturing method of claim 8, wherein the capturing the image comprises:
capturing the image at an end of countdown of the timing indicator if the result of the determining is yes.

## Patentansprüche

1. Bildaufnahmeverfahren zum Unterstützen eines Benutzers, um die Rückgabeaufzeichnung eines Fahrzeugs zu speichern, wobei das Verfahren aufweist:
Bereitstellen eines Bildaufnahmebereichs (111) an einem Anzeigebildschirm (110) der Benutzervorrichtung (100);
Bereitstellen eines Anzeigebereichs in dem Bildaufnahmebereich (111);
Markieren eines Nummernschilds eines Mietfahrzeugs nach dem Identifizieren des Nummernschilds basierend auf mindestens einem Merkmal in dem Bildaufnahmebereich (111),
wobei das mindestens eine Merkmal englische Buchstaben und Zahlen mit einem vorbestimmten Format/einer vorbestimmten Anzahl von Zeichen und einem vorbestimmten Nummernschild-Seitenverhältnis aufweist;
Ermitteln, ob sich das markierte Nummernschild in dem Anzeigebereich befindet und in einem vorbestimmten Verhältnis dargestellt ist, und
Aufnehmen eines Bildes, welches das Nummernschild in dem Bildaufnahmebereich (111) aufweist, als einen Mietfahrzeug-Rückgabe-Nachweis, nachdem ein Ergebnis des Ermittelns "ja" ist, und Hochladen des Mietfahrzeug-Rückgabe-Nachweises in eine Cloud-Speicher-Vorrichtung.

2. Bildaufnahmeverfahren gemäß Anspruch 1, wobei das vorbestimmte Verhältnis ein Verhältnis des Nummernschilds, welches sich in dem Anzeigebereich befindet, zu dem Bildaufnahmebereich (111) ist.

3. Bildaufnahmeverfahren gemäß einem der vorhergehenden Ansprüche, ferner aufweisend:
ferner Bereitstellen eines Bedienbereichs (113) an dem Anzeigebildschirm (110), wobei der Bedienbereich (113) und der Bildaufnahmebereich (111) nebeneinander liegen.

4. Bildaufnahmeverfahren gemäß Anspruch 3, wobei der Bedienbereich (113) mindestens eines aufweist von: einem virtuellen Aufnahmeknopf (113a), einem virtuellen Blitzlichtknopf (113b), einem virtuellen Wiederaufnahmeknopf (113c) und einem virtuellen Upload-Knopf (113d).

5. Bildaufnahmeverfahren gemäß einem der vorhergehenden Ansprüche, ferner aufweisend:
ferner Bereitstellen eines Anleitungsinformationen-Anzeigebereichs (114) in dem Bildaufnahmebereich (111).

6. Bildaufnahmeverfahren gemäß Anspruch 5, wobei der Anleitungsinformationen-Anzeigebereich (114) ein Dialogfeld (114a) oder eine Zeitanzeige bereitstellt.

7. Bildaufnahmeverfahren gemäß einem der vorhergehenden Ansprüche, ferner aufweisend:
wenn sich das markierte Nummernschild nicht in dem Anzeigebereich befindet und/oder nicht in dem vorbestimmten Verhältnis dargestellt ist, Bereitstellen einer Anleitungsbeschreibung in einem Anleitungsinformationen-Anzeigebereich (114).

8. Bildaufnahmeverfahren gemäß einem der vorhergehenden Ansprüche, ferner aufweisend:
wenn sich das markierte Nummernschild in dem Anzeigebereich befindet und in dem vorbestimmten Verhältnis dargestellt ist, Bereitstellen einer Zeitanzeige in einem Anleitungsinformationen-Anzeigebereich (114).

9. Bildaufnahmeverfahren gemäß Anspruch 8, wobei das Aufnehmen des Bildes aufweist:
Aufnehmen des Bildes an dem Ende des Countdowns des Zeitindikators, wenn das Ergebnis des Ermittelns "ja" ist.

## Revendications

1. Procédé de capture d'image pour assister un utilisateur dans la sauvegarde de l'enregistrement de retour d'un véhicule, le procédé comprenant :
la fourniture d'une zone de capture d'image (111) sur un écran d'affichage (110) du dispositif (100) de l'utilisateur ;
la fourniture d'une zone d'indication dans la zone de capture d'image (111) ;
le marquage d'une plaque d'immatriculation d'un véhicule de location après avoir identifié la plaque d'immatriculation sur la base d'au moins une caractéristique dans la zone de capture d'image (111),
dans lequel ladite au moins une caractéristique comprend des lettres et des chiffres anglais avec un format/nombre de caractères prédéterminés et un rapport d'aspect prédéterminé de plaque d'immatriculation ;
la détermination si la plaque d'immatriculation marquée est située dans la zone d'indication et présentée dans un rapport prédéterminé ; et
la capture d'une image comprenant la plaque d'immatriculation dans la zone de capture d'image (111) en tant que preuve de retour du véhicule de location une fois qu'un résultat de la détermination est positif, et le téléchargement de la preuve de retour du véhicule de location vers un dispositif de stockage en nuage.

2. Procédé de capture d'image selon la revendication 1, dans lequel le rapport prédéterminé est un rapport de la plaque d'immatriculation située dans la zone d'indication à la zone de capture d'image (111).

3. Procédé de capture d'image selon l'une quelconque des revendications précédentes, comprenant en outre :
la fourniture, en outre, d'une zone d'opération (113) sur l'écran d'affichage (110), la zone d'opération (113) et la zone de capture d'image (111) étant côte à côte.

4. Procédé de capture d'image selon la revendication 3, dans lequel la zone d'opération (113) fournit au moins un parmi un bouton virtuel de prise de vue (113a), un bouton virtuel de flash (113b), un bouton virtuel de reprise de vue (113c), et un bouton virtuel de téléchargement (113d).

5. Procédé de capture d'image selon l'une quelconque des revendications précédentes, comprenant en outre :
la fourniture, en outre, d'une zone d'affichage d'informations de guidage (114) dans la zone de capture d'images (111).

6. Procédé de capture d'image selon la revendication 5, dans lequel la zone d'affichage d'informations de guidage (114) fournit une boîte de dialogue (114a) ou un indicateur de temps.

7. Procédé de capture d'image selon l'une quelconque des revendications précédentes, comprenant en outre :
lorsque la plaque d'immatriculation marquée n'est pas située dans la zone d'indication et/ou n'est pas présentée dans le rapport prédéterminé, la fourniture d'une description de guidage dans une zone d'affichage d'informations de guidage (114).

8. Procédé de capture d'image selon l'une quelconque des revendications précédentes, comprenant en outre :
lorsque la plaque d'immatriculation marquée est située dans la zone d'indication et présentée dans le rapport prédéterminé, la fourniture d'un indicateur de temps dans une zone d'affichage d'informations de guidage (114).

9. Procédé de capture d'image selon la revendication 8, dans lequel la capture d'image comprend :
la capture de l'image à une fin de compte à rebours de l'indicateur de temps si le résultat de la détermination est positif.
